# FASCICULE DE BREVET EUROPEEN

(11) **EP 2 044 681 B1**
(45) Date de publication et mention de la délivrance du brevet: **04.04.2018**
(21) Numéro de dépôt: 07823309.5
(22) Date de dépôt: 20.07.2007
(51) Int. Cl.: H02P 7/00

(54) **CIRCUIT D'ALIMENTATION D'UN MOTEUR POURVU D'UN ORGANE ASSURANT UNE COMMUTATION DE PUISSANCE, UNE PROTECTION CONTRE UNE INVERSION DE POLARITES ET UNE LIMITATION DU COURANT D'APPEL D'UN ÉLÉMENT CAPACITIF**
VERSORGUNGSSCHALTUNG FÜR EINEN MOTOR ZUR ENTSORGUNG EINES STROMSCHALTUNGSELEMENTS, SCHUTZ GEGEN POLARITÄTSUMKEHRUNG UND ELEMENT ZUR BEGRENZUNG DES ZUSTROMS EINES KAPAZITIVEN ELEMENTS
SUPPLY CIRCUIT FOR A MOTOR DISPOSING OF AN ELEMENT PROVIDING FOR POWER SWITCHING, A PROTECTION AGAINST POLARITY INVERSION AND AN ELEMENT FOR LIMITING THE INRUSH CURRENT OF A CAPACITIVE ELEMENT

(30) Priorité: 21.07.2006 FR 0606653
(43) Date de publication de la demande: 08.04.2009
(73) Titulaire: Valeo Systèmes de Contrôle Moteur, 95892 Cergy Pontoise (FR)
(72) Inventeur: PLAIDEAU, Michel, 95590 Presles (FR); TIHY, Mickael, 95800 Cergy Saint Christophe (FR)
(74) Mandataire: Rolland, Jean-Christophe
(86) Numéro de dépôt international: PCT/FR2007/001247
(87) Numéro de publication internationale: WO 2008/009827

(56) Documents cités:
- EP-A2- 1 349 255
- US-A- 5 635 804

## Description

La présente invention concerne un circuit d'alimentation d'un équipement électrique et un équipement électrique équipé d'un tel circuit. Un tel équipement est par exemple un moteur électrique destiné à entraîner un élément rotatif ou à assister le déplacement d'un tel élément.

### ARRIERE PLAN DE L'INVENTION

Un circuit d'alimentation d'un équipement électrique comporte généralement une ligne positive d'alimentation et une ligne négative d'alimentation ayant chacune une extrémité reliée à un dispositif de fourniture d'énergie, comme une batterie, et une extrémité reliée à l'équipement. Un élément capacitif de filtrage est habituellement monté sur une ligne secondaire ayant des extrémités reliées respectivement à la ligne positive et à la ligne négative. Comme chaque connexion du circuit à la batterie peut générer un courant d'appel destructeur pour l'élément capacitif, le circuit comprend un module de limitation du courant d'appel pour protéger l'élément capacitif de filtrage. Le module de limitation commande un organe de commutation disposé sur la ligne secondaire entre l'élément capacitif de filtrage et la ligne négative, ce qui constitue une solution relativement efficace mais qui présente le défaut d'introduire une impédance en série avec l'élément capacitif de filtrage. Le circuit comprend en outre un module de protection contre une inversion de polarités pour couper le circuit lorsqu'une telle inversion de polarités peut avoir des conséquences préjudiciables au bon fonctionnement de l'équipement. Le module de protection commande un relais électromécanique disposé sur la ligne positive en amont de sa liaison avec la ligne secondaire.

La tendance à la réduction du poids et de l'encombrement des équipements électriques et des composants qui leur sont associés pénalise les circuits ci-dessus et les équipements qu'ils alimentent de sorte qu'un besoin se fait jour de circuits plus compacts tout en étant au moins aussi performants et fiables.

### OBJET DE L'INVENTION

Un but de l'invention est de fournir une réponse à ce besoin.

### RESUME DE L'INVENTION

A cet effet, on prévoit, selon l'invention, un circuit d'alimentation d'un équipement électrique, ayant une ligne positive d'alimentation et une ligne négative d'alimentation auxquelles sont reliés, un module de limitation d'un courant d'appel et un élément capacitif de filtrage, l'élément capacitif de filtrage étant monté sur une ligne secondaire ayant des extrémités reliées respectivement à la ligne positive et à la ligne négative, le circuit comprenant un premier transistor MOSFET canal N et une diode montés en série sur la ligne positive, le premier transistor ayant une grille reliée au module de détection d'appel de courant, la diode ayant une cathode reliée à la ligne positive en amont de la liaison de la ligne positive à la ligne secondaire.

Le premier transistor est commandé pour assurer la limitation du courant d'appel tandis que la diode assure la protection de l'équipement contre les inversions de polarités. Le positionnement du premier transistor en amont de la liaison de la ligne positive à la ligne secondaire permet d'éviter d'introduire une impédance en série avec l'élément capacitif de filtrage, préservant ainsi les performances de celui-ci, notamment en tenue aux normes de compatibilité électromagnétique. Ce positionnement permet en outre de limiter les pertes dans le module de limitation du courant d'appel. Ce circuit est particulièrement fiable et comporte un nombre relativement faible de composants.

Le premier transistor présente, par exemple, un drain relié à une borne de liaison de la ligne positive à un dispositif de fourniture d'énergie, une source reliée à une anode de la diode.

De préférence, la diode est une diode intrinsèque d'un deuxième transistor MOSFET canal N ayant un drain relié à la ligne positive en amont de la liaison de la ligne positive à la ligne secondaire, une source reliée à la source du premier transistor et une grille reliée à un module de commande.

Ainsi, le regroupement et le montage tête-bêche des transistors sur la ligne positive permettent d'avoir un circuit particulièrement compact. La diode intrinsèque du deuxième transistor protège le circuit contre une inversion de polarité. La mise en série des transistors permet en outre de déconnecter de la source d'alimentation l'élément capacitif et l'équipement. La mise en état passant du deuxième transistor par le module de commande permet de limiter les pertes en conduction de la diode intrinsèque et l'échauffement de celle-ci en résultant lorsque les polarités ne sont pas inversées. Ce circuit possède de la sorte un bon rendement.

L'invention a également pour objet un équipement pourvu d'un tel circuit.

D'autres caractéristiques et avantage de l'invention ressortiront à la lecture de la description qui suit d'un mode de réalisation particulier non limitatif de l'invention.

### BREVE DESCRIPTION DES DESSINS

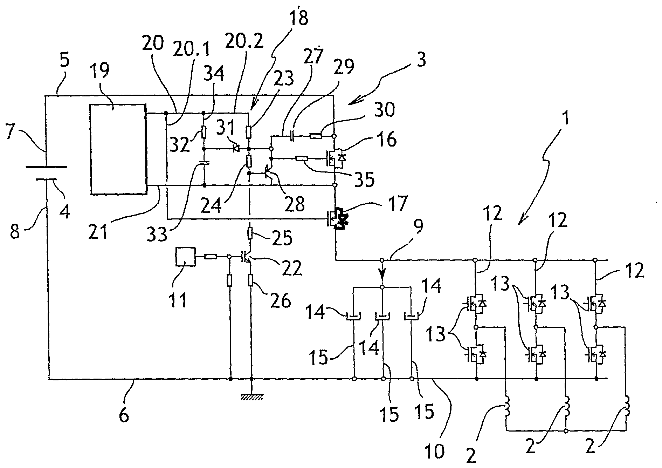

Il sera fait référence à la figure unique annexée, représentant schématiquement un équipement conforme à l'invention.

### DESCRIPTION DETAILLEE DE L'INVENTION

En référence aux figures, l'équipement conforme à l'invention, généralement désigné en 1, est ici un moteur électrique comprenant des enroulements 2 reliés par un circuit d'alimentation, généralement désigné en 3, à un dispositif de fourniture d'énergie, ici une batterie 4.

Le circuit d'alimentation 3 comprend une ligne positive 5 d'alimentation et une ligne négative 6 d'alimentation ayant chacune une extrémité 7, 8 reliée à la batterie 4 et une extrémité 9, 10 reliée à des lignes secondaires 12 parallèles. De façon classique, deux transistors 13 MOSFET (pour "Metal Oxyde Semiconductor Field Effect Transistor", transistor à effet de champ à semiconducteur en oxyde métallique) sont montés en série sur chaque ligne secondaire 12 et le point milieu entre chaque paire de transistors 13 est relié à un des enroulements 2, les grilles des transistors 13 étant reliées à un circuit de commande non représenté pour alimenter les enroulements 2 de manière correcte.

Des éléments capacitifs 14 de filtrage sont montés en parallèle et en amont des lignes secondaires 12 sur des lignes secondaires 15 ayant des extrémités reliées à l'extrémité 9 de la ligne positive 5 et à l'extrémité 10 de la ligne négative 6 de telle manière que l'anode et la cathode de chaque élément capacitif 14 soient reliées respectivement à la ligne positive 5 et à la ligne négative 6.

Conformément à l'invention, le circuit d'alimentation 3 comprend un premier transistor 16 et un deuxième transistor 17 montés en série sur la ligne positive 5. Les transistors 16 et 17 sont des transistors MOSFET canal N.

Le transistor 16 a, par exemple, un drain relié à l'extrémité 7 assurant la liaison de la ligne positive 5 à la batterie 4, une source reliée à une source du transistor 17. Il présente par ailleurs une grille reliée à un circuit de commande généralement désigné en 18.

Le transistor 17 a un drain relié à l'extrémité 9 de la ligne positive 5 et une grille reliée au circuit de commande 18.

Le circuit de commande 18 comprend une source additionnelle d'énergie 19, telle qu'une batterie additionnelle ou un dispositif d'alimentation flottante par rapport à la batterie 4, à partir de laquelle s'étendent une ligne positive 20 d'alimentation ayant une branche 20.1 reliée à la grille du transistor 17 et une ligne de masse 21 reliée au point milieu entre les transistors 16, 17. La source additionnelle d'énergie délivre ici une tension de 12 volts référencée sur la source des transistors 16, 17. En cas d'inversion de polarités, la tension de cette source additionnelle est nulle. On comprend qu'ainsi une inversion de polarité aux extrémités 7, 8 du circuit d'alimentation 3 entraîne un blocage du transistor 17, le transistor 17 étant passant lorsque les polarités sont respectées.

La ligne positive 20 comporte également une branche 20.2 reliée à la ligne négative 6 par un transistor 22 (de type NPN) dont la base est reliée à un circuit de commande schématisé en 11. Le transistor 22 permet de commander l'arrêt du circuit de commande 18. La branche 20.2 comprend en outre, en amont du transistor 22, trois résistances 23, 24, 25 (la résistance 25 étant reliée au collecteur du transistor 22) et, en aval du transistor 22, une résistance 26 (reliée à l'émetteur du transistor 22 et à la ligne négative 6).

La ligne de masse 21 est reliée à la ligne positive 5 au niveau du drain du transistor 16 par une branche 27 comprenant successivement en direction du drain du transistor 16 un transistor 28 (de type PNP), un condensateur 29 et une résistance 30. La base du transistor 28 est reliée au point milieu entre les résistances 24, 25 et le collecteur du transistor 28 est relié à la ligne de masse 21.

La grille du transistor 16 est reliée à l'émetteur du transistor 28 par une résistance 35.

Le point milieu entre les résistances 23 et 24 est relié, d'une part, à la branche 27 en aval du condensateur 29 et, d'autre part, via une diode 31, au point milieu d'une résistance 32 et d'un condensateur 33 d'une ligne secondaire 34 reliant la branche 20.2 à la ligne de masse 21.

La détermination des valeurs des condensateurs et des résistances est effectuée de façon connue en elle-même de manière à piloter le transistor 16 en mode linéaire de telle façon que le transistor 16 limite le courant circulant dans la ligne positive 5 à la valeur de charge acceptable par les éléments capacitifs de filtrage 14.

Le circuit de commande 18 constitue ainsi un module de limitation des courants d'appel, un module de protection contre une inversion de polarités survenant par exemple en cas d'erreur de branchement de la batterie 4 au circuit d'alimentation 3, et un module contacteur de puissance permettant la déconnexion de la batterie des éléments de puissance de l'équipement.

Bien entendu, l'invention n'est pas limitée au mode de réalisation décrit mais englobe toute variante entrant dans le cadre de l'invention telle que définie par les revendications.

En variante, le circuit d'alimentation peut subir des modifications pour répondre à des besoins particuliers de l'utilisateur. Ainsi, le transistor 22 est facultatif et peut donc être supprimé lorsqu'un arrêt rapide du circuit d'alimentation n'est pas nécessaire. Il est possible d'adjoindre au circuit d'alimentation un circuit agencé pour détecter des courts-circuits dans les transistors 13 et pour commander l'ouverture du transistor 16 lorsqu'un court-circuit est détecté (et ainsi protéger l'équipement ou éviter de fondre le fusible de la batterie si celle-ci en est équipée). Le circuit d'alimentation peut également équiper des équipements insensibles à une inversion de polarités ou des équipements pourvus d'un relais dédié en court-circuitant le transistor 17 sans autre modification du circuit d'alimentation. Le circuit d'alimentation peut être relié à plusieurs équipements et/ou comprendre des composants numériques.

Le transistor 17 peut être remplacé par une diode ayant une anode reliée à la source du transistor 16 et une cathode reliée à la ligne positive en amont de la liaison de la ligne positive à la ligne secondaire.

## Revendications

1. Circuit d'alimentation (3) d'un équipement électrique (1), ayant une ligne positive (5) d'alimentation et une ligne négative (6) d'alimentation auxquelles sont reliés un module de limitation d'un courant d'appel (18) et un élément capacitif de filtrage (14), l'élément capacitif de filtrage étant monté sur une ligne secondaire (14) ayant des extrémités reliées respectivement à la ligne positive et à la ligne négative, le circuit comprenant un premier transistor (16) MOSFET canal N et une diode montés en série sur la ligne positive, le premier transistor ayant un drain relié à une borne de liaison (7) de la ligne positive (5) à un dispositif de fourniture d'énergie (4), une source reliée à une anode de la diode et une grille reliée au module de limitation du courant d'appel, la diode ayant une cathode reliée à la ligne positive en amont de la liaison de la ligne positive à la ligne secondaire, **caractérisé en ce que** la diode est une diode intrinsèque d'un deuxième transistor (17) MOSFET canal N ayant un drain relié à la ligne positive (5) en amont de la liaison de la ligne positive à la ligne secondaire (15), une source reliée à la source du premier transistor (16) et une grille reliée à un module de commande (18).

2. Circuit selon la revendication 1, comprenant une source additionnelle d'énergie (19) ayant une ligne positive ayant une première branche (20.1) reliée à la grille du deuxième transistor (17) et une ligne de masse (21) reliée aux sources du premier transistor (16) et du deuxième transistor.

3. Circuit selon la revendication 2, dans lequel la ligne positive (20) issue de la source additionnelle d'énergie (19) comprend une deuxième branche (20.2) reliée à la ligne négative (6), et dans lequel une branche (27), à laquelle la grille du premier transistor (16) est reliée, s'étend entre le drain du premier transistor et la ligne de masse (21) et incorpore un transistor (28) ayant une base reliée à la seconde branche (20.2) et un collecteur relié à la ligne de masse.

4. Equipement électrique incorporant un circuit d'alimentation (3) conforme à l'une quelconque des revendications précédentes.

## Patentansprüche

1. Versorgungsschaltung (3) einer elektrischen Anlage (1), die eine positive Versorgungsleitung (5) und eine negative Versorgungsleitung (6) besitzt, mit denen ein Weckerstrom-Begrenzungsmodul (18) und ein kapazitives Filterungselement (14) verbunden sind, wobei das kapazitive Filterungselement an einer sekundären Leitung (14) montiert ist, deren Enden mit der positiven Leitung bzw. mit der negativen Leitung verbunden sind, wobei die Schaltung einen ersten N-Kanal-MOSFET-Transistor (16) und eine in Reihe mit der positiven Leitung montierte Diode umfasst, wobei der erste Transistor einen Drain, der mit einem Verbindungsanschluss (7) der positiven Leitung (5) mit einer Energiebereitstellungsvorrichtung (4) verbunden ist, eine Source, die mit einer Anode der Diode verbunden ist, und ein Gate, das mit dem Weckerstrom-Begrenzungsmodul verbunden ist, besitzt, wobei die Diode eine Katode besitzt, die vor der Verbindung der positiven Leitung mit der sekundären Leitung mit der positiven Leitung verbunden ist, **dadurch gekennzeichnet, dass** die Diode eine intrinsische Diode eines zweiten N-Kanal-MOSFET-Transistors (17) ist, dessen Drain vor der Verbindung der positiven Leitung mit der sekundären Leitung (15) mit der positiven Leitung (5) verbunden ist, dessen Drain mit der Source des ersten Transistors (16) verbunden ist und dessen Gate mit einem Steuermodul (18) verbunden ist.

2. Schaltung nach Anspruch 1, die eine zusätzliche Energiequelle (19) umfasst, die eine positive Leitung, die einen ersten Zweig (20.1) besitzt, der mit dem Gate des zweiten Transistors (17) verbunden ist, und eine Masseleitung (21), die mit den Sources des ersten Transistors (16) und des zweiten Transistors verbunden ist, besitzt.

3. Schaltung nach Anspruch 2, wobei die positive Leitung (20), die von der zusätzlichen Energiequelle (19) ausgeht, einen zweiten Zweig (20.2) aufweist, der mit der negativen Leitung (6) verbunden ist, und wobei ein Zweig (27), mit dem das Gate des ersten Transistors (16) verbunden ist, zwischen dem Drain des ersten Transistors und der Masseleitung (21) verläuft und einen Transistor (28) enthält, der eine mit dem zweiten Zweig (20.2) verbundene Basis und einen mit der Masseleitung verbundenen Kollektor besitzt.

4. Elektrische Anlage, die eine Versorgungsschaltung (3) nach einem der vorhergehenden Ansprüche umfasst.

## Claims

1. Power supply circuit (3) for electrical equipment (1), having a positive supply rail (5) and a negative supply rail (6) to which an inrush current limitation module (18) and a capacitive filtering element (14) are connected, the capacitive filtering element being mounted on a secondary line (14) having ends respectively connected to the positive rail and to the negative rail, the circuit comprising a first n-channel MOSFET transistor (16) and a diode mounted in series on the positive rail, the first transistor having a drain connected to a connecting terminal (7) from the positive rail (5) to a device for supplying energy (4), a source connected to an anode of the diode and a gate connected to the inrush current limitation module, the diode having a cathode connected to the positive rail upstream of the link from the positive rail to the secondary line, **characterized in that** the diode is an intrinsic diode of a second n-channel MOSFET transistor (17) having a drain connected to the positive rail (5) upstream of the link from the positive rail to the secondary line (15), a source connected to the source of the first transistor (16) and a gate connected to a control module (18).

2. Circuit according to Claim 1, comprising an additional source of energy (19) having a positive rail with a first branch (20.1) connected to the gate of the second transistor (17) and a ground rail (21) connected to the sources of the first transistor (16) and of the second transistor.

3. Circuit according to Claim 2, in which the positive rail (20) coming from the additional source of energy (19) comprises a second branch (20.2) connected to the negative rail (6), and in which a branch (27), to which the gate of the first transistor (16) is connected, runs between the drain of the first transistor and the ground rail (21) and incorporates a transistor (28) having a base connected to the second branch (20.2) and a collector connected to the ground rail.

4. Electrical system incorporating a power supply circuit (3) in accordance with any one of the preceding claims.
